# EUROPÄISCHE PATENTANMELDUNG

(11) **EP 0 806 880 A2**
(43) Veröffentlichungstag der Anmeldung: **12.11.1997**
(21) Anmeldenummer: 97401045.6
(22) Anmeldetag: 09.05.1997
(51) Int. Cl.: H04Q 7/34

(54) **Verfahren und Vorrichtung zum Optimieren eines Mobilfunknetzes**

(30) Priorität: 11.05.1996 DE 19619205
(71) Anmelder: ALCATEL ALSTHOM COMPAGNIE GENERALE D'ELECTRICITE, 75008 Paris (FR)
(72) Erfinder: Collmann, Ralf, 74078 Heilbronn (DE)
(74) Vertreter: Knecht, Ulrich Karl, Dipl.-Ing.

(57) **Zusammenfassung**

Um ein sich im Betrieb befindendes Mobilfunknetz zu optimieren, wird vorgeschlagen, durch eine Überwachung des Mobilfunknetzes (MRN) mittels einer Betriebs- und Wartungszentrale (OMC) festzustellen, ob ein Fehler im Mobilfunknetz auftritt, und in diesem Fall in dem Mobilfunknetz gemessene Istdaten als Eingangsdaten (DIN) in eine rechnergesteuerte Vorrichtung (NPT) einzuspeisen, um damit Ausgangsdaten (DOUT) zu berechnen, die als Solldaten zum Optimieren von Parametereinstellungen im Mobilfunknetz (MRN) zu verwenden sind.

Es wird vorgeschlagen, einen Regelkreis aufzubauen, der die Betriebs- und Wartungszentrale (OMC) und die rechnergesteuerte Vorrichtung (NPT) enthält, die an sich zum Planen von Funknetzen dient. Demnach wird die Vorrichtung, die ein sogenanntes Netzplanungswerkzeug (Network Planning Tool) ist, erfindungsgemäß als Netzoptimierungswerkzeug eingesetzt.

## Beschreibung

Die Erfindung betrifft ein Verfahren nach dem Oberbegriff des Anspruchs 1 und eine dafür vorgesehene Vorrichtung nach dem Oberbegriff des nebengeordneten Anspruchs.

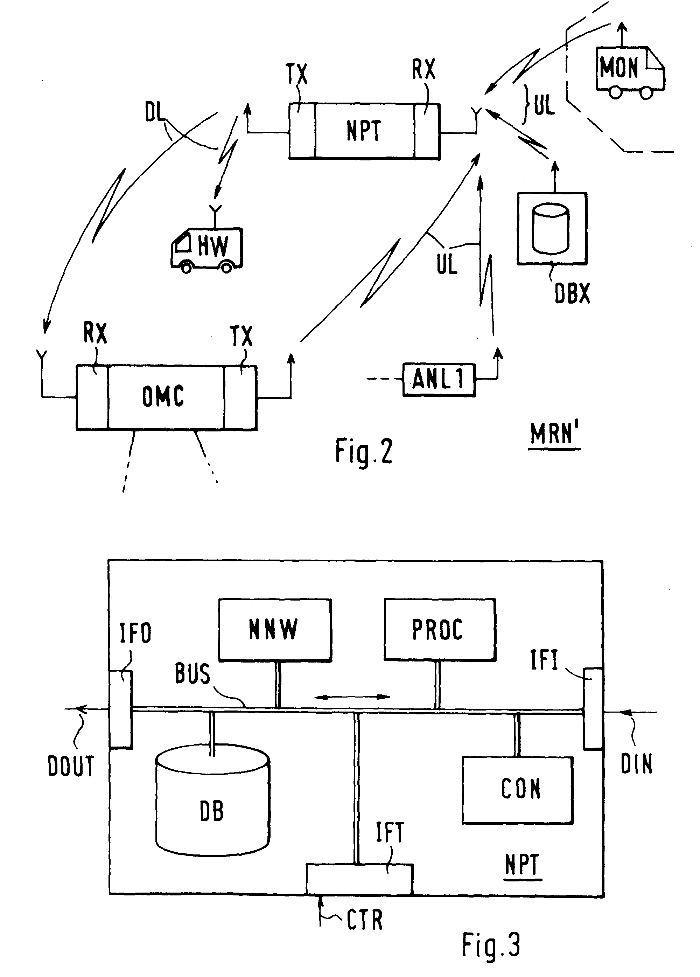

Aus WO 92/21182 sind ein Verfahren zum Optimieren eines sich im Betrieb befindenden Mobilfunknetzes und eine dafür vorgesehene Vorrichtung bekannt. Nach dem dortigen Verfahren wird durch eine Überwachung des Mobilfunknetzes mittels einer Betriebs- und Wartungszentrale ("administrative center 200", Seite 13, Zeilen 26 ff) festgestellt, ob ein Fehler im Mobilfunknetz auftritt ("malfunctions and alarms", Seite 12, Zeilen 17-20). Falls dort ein Fehler auftritt, werden an dem Mobilfunknetz Istdaten ("cell parameters") abgerufen, um damit Solldaten ("set of proposed changes") zum Optimieren von Parametereinstellungen im Mobilfunknetz zu berechnen (s. dort Patentanspruch 1 sowie Beschreibung zu Fig.3). Die Vorrichtung zur Durchführung dieses Verfahrens ist die Betriebs- und Wartungszentrale selbst (s. dort Seite 13, Zeilen 26 ff).

Aufgabe und Erfindung ist es, das eingangs genannte Verfahren zu verbessern, damit es in einer Vorrichtung durchgeführt werden kann, die besonders gut zur Berechnung der Solldaten aus den Istdaten geeignet ist und die möglichst keine Rechnerkapazität von der Betriebs- und Wartungszentrale benötigt.

Gelöst wird die Aufgabe durch ein Verfahren nach Anspruch 1 und durch eine Vorrichtung nach dem nebengeordneten Anspruch. Demnach ist die Vorrichtung eine rechnergesteuerte Vorrichtung zum Planen von Funknetzen, ein sogenanntes "Network Planning Tool", und die Istdaten sind Eingangsdaten für diese rechnergesteuerte Vorrichtung, die mittels Meßvorrichtungen gemessen werden. Außerdem sind die Solldaten Ausgangsdaten der rechnergesteuerten Vorrichtung, die diese mittels der Eingangsdaten und mittels gemäß einem Funknetzmodell vorgegebener Planungsdaten berechnet.

Durch die Erfindung wird eine an sich für die Netzplanung vorgesehene Vorrichtung zur Optimierung eines sich im Betrieb befindenden Mobilfunknetzes eingesetzt. Damit gestaltet sich die Optimierung sehr einfach. Zudem ist durch Aufbau einer die Vorrichtung und die Betriebs- und Wartungszentrale enthaltene Regelschleife eine vollautomatische Optimierung des Mobilfunknetzes möglich.

Vorteilhafte Ausgestaltungen der Erfindung sind den Unteransprüchen zu entnehmen.

Im weiteren wird die Erfindung näher beschrieben anhand eines Ausführungsbeispiels und unter Zuhilfenahme der folgenden Zeichnungen:
- Fig. 1,: die schematisch den Aufbau einer Regelschleife zur Optimierung darstellt;
- Fig. 2,: die schematisch den Aufbau einer drahtlosen Regelschleife darstellt;
- Fig. 3,: die ein Blockschaltbild der Vorrichtung ist; und
- Fig. 4,: die ein Ablaufdiagramm des Verfahrens ist.

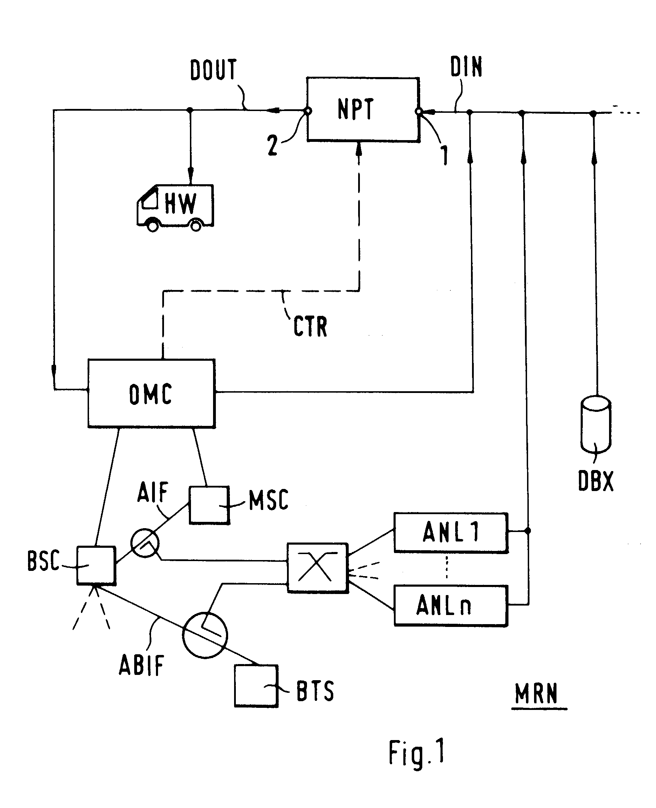

Fig. 1 zeigt schematisch eine Regelschleife zur Optimierung eines sich im Betrieb befindenden Mobilfunknetzes MRN. Die Regelschleife enthält im wesentlichen eine rechnergesteuerte Vorrichtung NPT, die erfindungsgemäß einem sogenannten "Network Planning Tool" entspricht, und eine Betriebs- und Wartungszentrale OMC. Ein Eingang 1 der Vorrichtung NPT ist mit der Betriebs- und Wartungszentrale OMC verbunden. Ein Ausgang 2 der Vorrichtung NPT ist mit einem Eingang der Betriebs- und Wartungszentrale verbunden. Außerdem führt eine Verbindung zur Übertragung von Steuersignalen CTR von der Betriebs- und Wartungszentrale zu der Vorrichtung. Die Betriebs- und Wartungszentrale OMC ist in diesem Beispiel mit einer Mobilfunkvermittlungsstelle MSC und mit einer Funkfeststationssteuerung BSC verbunden. Das Mobilfunknetz enthält in der Regel mehrere Mobilfunkvermittlungsstellen und Funkfeststationssteuerungen. Die Mobilfunkvermittlungsstelle MSC, die daran angeschlossene Funkfeststationssteuerung BSC und die damit verbundenen Funkfeststationen BTS bilden Komponenten des Mobilfunknetzes MRN, welches hier ein Mobilfunknetz nach dem GSM-Standard ist. Die Verbindung zwischen der Mobilfunkvermittlungsstelle und der Funkfeststationssteuerung ist eine X.25-Verbindung AIF. Die Funkfeststationssteuerung steuert mehrere der Funkfeststationen und ist über PCM-30-Verbindungen ABIF mit diesen verbunden. Die Verbindung AIF wird im weiteren auch kurz A-Schnittstelle genannt, die Verbindung ABIF wird im weiteren auch kurz ABIS-Schnittstelle genannt, entsprechend der im GSM-Standard festgelegten Nomenklatur.

Zur Überwachung des Signalisierungs- und Nachrichtenverkehrs auf diesen Schnittstellen sind dort Meßvorrichtungen angeordnet, die über ein Koppelfeld mit Auswertereinheiten zur Netzanalyse ANL1 bis ANLn verbunden sind. Diese Auswertereinrichtungen sind hier Protokollanalysatoren, die die Datenübertragung über die genannten Schnittstellen AIF und ABIF anhand der vorgegebenen verschiedenen Protokollen (z. B. MAP, ISUP, LAPD) auswerten. Falls Fehler bei der-Datenübertragung über die genannten Schnittstellen auftreten, werden diese mittels der Analysatoren festgestellt. Die Analysatoren ANL1 bis ANLn erzeugen Istdaten, d.h. Meßdaten zur Datenübertragung, die als Eingangsdaten DIN über eine Verbindung zum Eingang 1 der Vorrichtung NPT geführt werden. Auch die Betriebs- und Wartungszentrale OMC erzeugt Eingangsdaten DIN und überträgt diese an die Vorrichtung NPT. Die von der Betriebs- und Wartungszentrale erzeugten Eingangsdaten betreffen im wesentlichen den Istzustand der genannten Komponenten MSC, BSC und BTS. Eingangsdaten werden u. a. aus Betriebsdaten gewonnen, die etwa die momentane Verkehrs last, die Anzahl der gesperrten Funkkanalzugänge oder die Anzahl der Zugriffswünsche angeben.

Außerdem ist in Fig. 1 eine Datenbank DBX dargestellt, die mit dem Eingang der Vorrichtung NPT verbunden ist und auch Eingangsdaten DIN überträgt. Die dargestellte Datenbank DBX ist eine Kundendatenbank, in der vom Netzbetreiber des Mobilfunknetzes eingehende Teilnehmerbeschwerden gespeichert werden.

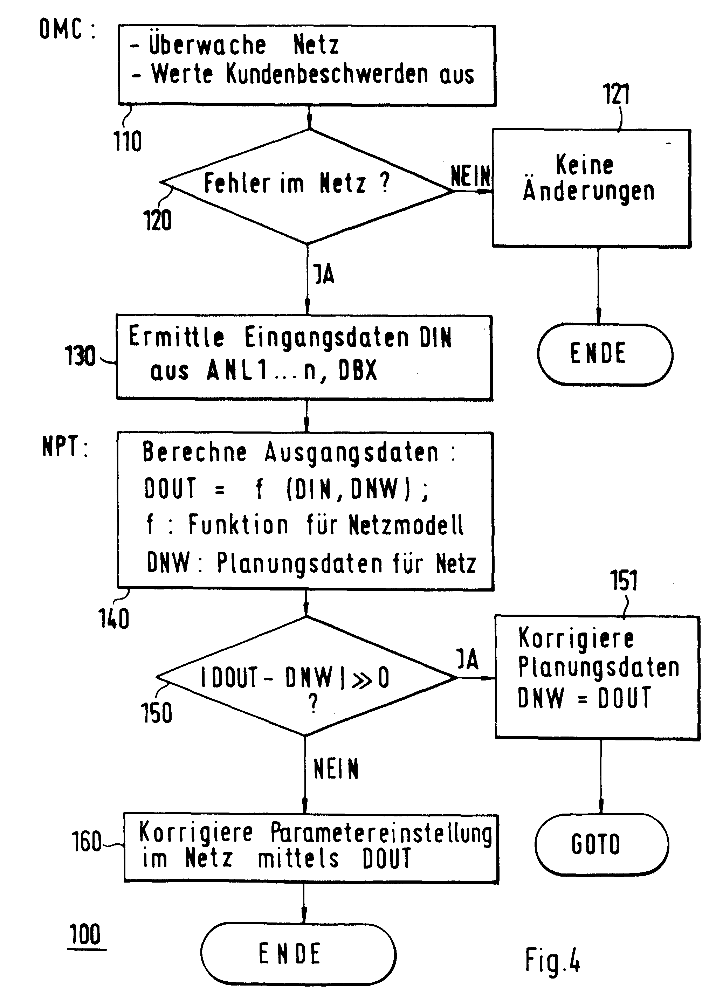

Das in Fig. 1 dargestellte Mobilfunknetz mit der oben beschriebenen Regelschleife arbeitet nach folgendem Verfahren, dessen Flußdiagramm in Fig. 4 dargestellt ist (Im weiteren werden Fig. 1 und Fig. 4 zusammen betrachtet):

In dem Verfahren 100 überwacht die Betriebs- und Wartungszentrale OMC zunächst die Funktionen des Netzes, indem sie u.a. Fehler in der Datenübertragung auf den Schnittstellen AIF und ABIF feststellt, durch Steuerung der Analysatoren ANL1 bis ANLn. Auch ist die Betriebs- und Wartungszentrale OMC in der Lage, Fehler innerhalb der Komponenten MSC, BSC und BTS festzustellen. Außerdem ist die Betriebs- und Wartungszentrale mit der Datenbank DBX verbunden (nicht dargestellt), um dort gespeicherte Kundenbeschwerden auszuwerten (Schritt 110).

In einem zweiten Schritt 120 wird festgestellt, ob ein Fehler im Netz auftritt. Ist dies nicht der Fall, so werden in einem Schritt 121 keine Änderungen durchgeführt. Ist dies jedoch der Fall, so werden in einem Schritt 130 die Eingangsdaten für die Vorrichtung NPT ermittelt. Der Inhalt dieser Eingangsdaten DIN gibt Auskunft über die Netzüberwachung, insbesondere Auskunft über Fehler in den genannten Komponenten oder in der Datenübertragung auf den genannten Schnittstellen. Außerdem umfassen die Eingangsdaten DIN auch Informationen aus der Kundendatenbank DBX.

Liegen nun die Eingangsdaten DIN am Eingang der Vorrichtung NPT an, so löst die Betriebs- und Wartungszentrale OMC mittels eines Steuersignales CTR die Berechnung von Ausgangsdaten aus diesen Eingangsdaten innerhalb der Vorrichtung NPT aus. Es ist auch denkbar, daß die Berechnung der Ausgangsdaten durch die Übertragung der Eingangsdaten selbst, d. h. ohne das Steuersignal CTR, ausgelöst wird. In einem Schritt 140 werden die Ausgangsdaten DOUT anhand einer Funktion berechnet, die das Funknetzmodell (z. B. nach WALFISH u. IKEGAMI) des Mobilfunknetzes MRN wiedergibt. Variablen dieser Funktion sind u. a. die Eingangsdaten DIN und Planungsdaten DNW für das Netz. Zur Nachbildung eines Funknetzmodells werden i. d. R. nichtlineare Gleichungssysteme benötigt. Die Darstellung in Fig. 4 der Funktion f (DIN, DNW) ist hier nur eine schematische Darstellung eines solchen Gleichungssystems. Mittels der Eingangsdaten DIN und der Planungsdaten DNW für das Netz berechnet die Vorrichtung NPT die Ausgangsdaten DOUT. Dazu enthält die Vorrichtung NPT ein lernfähiges, neuronales Netzwerk, das vor der Berechnung mittels Eingabe von sogenannten Trainingssequenzen eingerichtet wurde, d. h. auf das Mobilfunknetz MRN geeicht wurde.

In einem Schritt 150 wird nun überprüft, ob die berechneten Ausgangsdaten DOUT von den Planungsdaten DNW abweichen. Ist dies der Fall, so werden in einem Schritt 151 die Planungsdaten DNW korrigiert, indem diese gleich den Ausgangsdaten DOUT gesetzt werden. Weichen die berechneten Ausgangsdaten DOUT nur unwesentlich von den Planungsdaten DNW ab, so wird in einem Schritt 160 die Parametereinstellung im Netz geändert mittels der berechneten Ausgangsdaten. Unter Korrektur der Parametereinstellungen im Netz werden hier folgende Maßnahmen verstanden:

Korrektur von Einstellungen in den Komponenten MSC, BSC und BTS, wie etwa sogenanntes "frequency redefinition" an der BSC oder "power ramping" an der BTS. Diese Maßnahmen betreffen im wesentlichen Softwareparameter und können zum großen Teil von der Betriebs- und Wartungszentrale OMC über Steuerbefehle im Netz durchgeführt werden. Außerdem werden unter der Korrektur von Parametereinstellungen auch Maßnahmen an der Hardware HW im Netz MRN verstanden. Die Änderungen der Hardware HW des Mobilfunknetzes werden im wesentlichen im Feld durchgeführt. Dazu zählen z. B. die Installation und Justierung von Sektorantennen oder die Einrichtung zusätzlicher Funkträger. Sind im Schritt 160 die notwendigen Parametereinstellungen mittels der berechneten Ausgangsdaten geändert worden, so ist die Optimierung des Netzes durchgeführt. Das Verfahren nach Fig. 4 kann dadurch fortlaufend durchgeführt werden, indem dem Schritt 160 der Schritt 110 folgt (nicht dargestellt).

Das erfindungsgemäße Verfahren, wie etwa oben anhand der Fig. 1 und 4 beschrieben, ist sehr einfach durchführbar, da nur der Aufbau der beschriebenen Regelschleife mittels an sich bekannter Vorrichtungen (NPT und OMC) aufgebaut wird. Erfindungsgemäß wird somit die Vorrichtung NPT, die an sich zur Netzplanung dient, hier zur Optimierung des sich im Betrieb befindenden Mobilfunknetzes verwendet.

In Fig. 2 ist ein Mobilfunknetz MRN' dargestellt, in dem eine Regelschleife mittels drahtloser Verbindungen zwischen der Betriebs- und Wartungszentrale OMC und der Vorrichtung NPT aufgebaut ist.

So enthalten die Betriebs- und Wartungszentrale OMC wie auch die Vorrichtung NPT jeweils einen Sender TX und einen Empfänger RX. Die Betriebs- und Wartungszentrale und die Vorrichtung sind drahtlos über Funkschnittstellen DL und UL miteinander verbunden. Auch sind die Analysatoren ANL1 und die Kundendatenbank DBX drahtlos mit der Vorrichtung NPT verbunden. Die Regelschleife in Fig. 2 arbeitet nach dem bereits beschriebenen Verfahren (vgl. Fig. 4), d. h. die Betriebs- und Wartungszentrale OMC, die Analysatoren ANL1 und die Kundendatenbank DBX liefern Eingangsdaten für die Vorrichtung NPT. Aus den Eingangsdaten werden anhand der beschriebenen Funktion des Netzmodelles Ausgangsdaten berechnet, die die Vorrichtung NPT an die Betriebs- und Wartungszentrale wie auch an Einrichtungen zur Änderung der Hardware HW sendet. In Fig. 2 ist außerdem eine mobile Einrichtung MON zur Überwachung von Netzfunktionen, insbesondere zur Überwachung der Funkfeldversorgung, dargestellt. Diese mobile Einrichtung MON liefert ebenfalls Eingangsdaten an die Vorrichtung NPT.

In Fig. 3 ist ein Blockschaltbild dargestellt, daß den schematischen Aufbau der Vorrichtung NPT erläutern soll. Die Vorrichtung NPT (Network Planning Tool) ist eine von einem Prozessor PROC gesteuerte Vorrichtung. Der Prozessor PROC ist über einen Daten- und Signalisierungsbus BUS mit folgenden Komponenten verbunden: mit einer Eingangsdatenschnittstelle IFI, mit einer Schnittstelle für Ein-/Ausgabegeräte IFT, mit einem Datenumsetzer CON, mit einer Schaltung NNW, mit einer Datenbank DB und mit einer Ausgangsdatenschnittstellenschaltung IFO.

Über die Eingangsdatenschnittstelle IFI empfängt die Vorrichtung NPT die Eingangsdaten DIN, welche vorzugsweise nach dem X.25-Protokoll strukturiert sind. Sollten die Eingangsdaten DIN nach einem anderen Protokoll strukturiert sein, so werden sie mittels des Datenumsetzers CON in die Struktur nach dem X.25-Protokoll umgesetzt.

Die Eingangsdaten DIN bilden im wesentlichen Meßdaten, die den Ist-Zustand des Mobilfunknetzes wiedergeben. Aus den Eingangsdaten DIN werden nun die Ausgangsdaten DOUT zur Parametereinstellung berechnet. Dazu steuert der Prozessor PROC die Schaltung NNW, welche ein lernfähiges, neuronales Netzwerk ist. Die Eingangsdaten DIN und die aus der Datenbank DB abgerufenen Planungsdaten DNW werden in der Schaltung NNW entsprechend der beschriebenen Funktion f (DIN, DNW) miteinander verknüpft, um die Ausgangsdaten DOUT zu berechnen. Über die Ausgangsdatenschnittstelle IFO werden die Ausgangsdaten DOUT an die Betriebs- und Wartungszentrale und ggfs. an andere Einrichtungen zur Einstellung von Software- und Hardwareparametern im Mobilfunknetz übertragen.

Die Erfindung wurde anhand eines nach dem GSM-Standard ausgelegten öffentlichen Mobilfunknetzes beschrieben. Es sind jedoch auch andere Ausführungsbeispiele denkbar, wie etwa der Einsatz der Erfindung in einem privaten Mobilfunknetz, z. B. nach dem TETRA-Standard, oder der Einsatz in einem universellen Mobilfunknetz, dem sogenannten UMTS (Universal Mobile Telecommunication System).

## Patentansprüche

1. Verfahren (100) zum Optimieren eines sich im Betrieb befindenden Mobilfunknetzes (MRN) mit folgenden Schritten:
- durch eine Überwachung (Schritt 110) des Mobilfunknetzes mittels einer Betriebs- und Wartungszentrale (OMC) wird festgestellt, ob ein Fehler im Mobilfunknetz auftritt (Schritt 120),
- falls ein Fehler auftritt, werden aus dem Mobilfunknetz Istdaten abgerufen, um damit Solldaten zum Optimieren von Parametereinstellungen im Mobilfunknetz (MRN) zu berechnen,
**dadurch gekennzeichnet**, daß
- die Istdaten Eingangsdaten (DIN) für eine rechnergesteuerte Vorrichtung (NPT) zum Planen von Funknetzen sind, die mittels Meßvorrichtungen (ANL1) ermittelt werden (Schritt 130), und daß
- die Solldaten Ausgangsdaten (DOUT) von der rechnergesteuerten Vorrichtung (NPT) sind, die von dieser mittels der Eingangsdaten (DIN) und mittels gemäß einem Funknetzmodell vorgegebener Planungsdaten (DNW) berechnet werden (Schritt 140).

2. Verfahren (100) nach Anspruch 1, dadurch gekennzeichnet, daß
- die Eingangsdaten (DIN) von den Meßvorrichtungen (ANL1) direkt oder von dort indirekt über die Betriebs- und Wartungszentrale (OMC) an die rechnergesteuerte Vorrichtung (NPT) übertragen werden.

3. Verfahren (100) nach Anspruch 1, dadurch gekennzeichnet, daß
- die Planungsdaten (DNW) mit den Ausgangsdaten (DOUT) verglichen werden (Schritt 150), um festzustellen, ob die Planungsdaten korrigiert werden müssen (Schritt 151).

4. Verfahren (100) nach Anspruch 2, dadurch gekennzeichnet, daß
- Parametereinstellungen im Mobilfunknetz (MRN) mittels der Ausgangsdaten (DOUT) berichtigt werden (Schritt 160), falls die Ausgangsdaten (DOUT) um mehr als ein vorgebbares Maß von den Planungsdaten (DNW) abweichen.

5. Verfahren nach Anspruch 4, dadurch gekennzeichnet, daß
- die Parametereinstellungen Software- und / oder Hardwareparameter betreffen.

6. Verfahren nach Anspruch 4, dadurch gekennzeichnet, daß
- die Schrittfolge von der Überwachung des Mobilfunknetzes (Schritt 110) bis zur Berichtigung der Parametereinstellungen (Schritt 160) so lange wiederholt wird, bis die Ausgangsdaten (DOUT) um weniger als das vorgebbare Maß von den Planungsdaten (DNW) abweichen.

7. Vorrichtung (NPT) zum Optimieren eines sich im Betrieb befindenden Mobilfunknetzes (MRN) mittels einer Betriebs- und Wartungszentrale (OMC), die das Mobilfunknetz überwacht und feststellt, ob ein Fehler auftritt, um dann Istdaten aus dem Mobilfunknetz abzurufen, mittels denen die Vorrichtung Solldaten zum Optimieren von Parametereinstellungen im Mobilfunknetz (MRN) berechnet,
**dadurch gekennzeichnet**, daß
die Vorrichtung eine rechnergesteuerte Vorrichtung (NPT) zum Planen von Funknetzen ist,
die Istdaten mittels Meßvorrichtungen (ANL1) ermittelte Eingangsdaten (DIN) für die rechnergesteuerte Vorrichtung (NPT) sind, und daß
die Solldaten Ausgangsdaten (DOUT) von der rechnergesteuerten Vorrichtung (NPT) sind, die diese mittels der Eingangsdaten (DIN) und mittels gemäß einem Funknetzmodell vorgegebener Planungsdaten (DNW) berechnet.
